# EUROPÄISCHE PATENTSCHRIFT

(11) **EP 2 073 451 B1**
(45) Veröffentlichungstag und Bekanntmachung des Hinweises auf die Patenterteilung: **08.06.2011**
(21) Anmeldenummer: 08021854.8
(22) Anmeldetag: 17.12.2008
(51) Int. Cl.: H04L 12/40

(54) **Verfahren zum Übertragen von Feldbus-Daten sowie Feldbus-Kommunikationssystem**
Method for transmitting field bus data and field bus communication system
Procédé de transmission de données de bus de terrain et système de communication de bus de terrain

(30) Priorität: 22.12.2007 DE 102007062387
(43) Veröffentlichungstag der Anmeldung: 24.06.2009
(73) Patentinhaber: Robert Bosch GmbH, 70469 Stuttgart (DE)
(72) Erfinder: Schaller, Ralf, 64385 Reichelsheim (DE)

(56) Entgegenhaltungen:
- EP-A- 1 648 116
- US-A1- 2005 165 995
- ANONYMOUS: "IEC61491, EN 61491 SERCOS interface. Die international genormte digitale Schnittstelle zur Kommunikation zwischen Steuerungen und Antrieben in numerisch gesteuerten Maschinen" INTERNET CITATION, [Online] XP002407215 Gefunden im Internet: URL:http:/www.sercos.de/pdf/sercos_kurzbes chreibung_de_0202.pdf> [gefunden am 2006-11-10]
- LUTZ P: "Ethernet motion technology: The SERCOS interface" INTERNET CITATION, [Online] XP002444842 Gefunden im Internet: URL:http://ethernet.industrial-networking. com/articles/articledisplay.asp ?id=196> [gefunden am 2007-05-10]

## Beschreibung

Die vorliegende Erfindung betrifft ein Verfahren zum Übertragen von Feldbus-Daten zwischen wenigstens zwei Teilnehmern eines Feldbus-Kommunikationssystems, einen Teilnehmer eines Feldbus-Kommunikationssystems, ein Feldbus-Kommunikationssystem, ein Computerprogramm sowie ein Computerprogrammprodukt.

### Stand der Technik

Ein Feldbus-Kommunikationssystem ist in der EP 1 648 116 A1 offenbart. Das Kommunikationssystem ist ringförmig aufgebaut, wobei ein Master und mehrere Slaves mittels einer auf Ethernet basierenden Feldbusphysik verbunden sind.

Die Teilnehmer sind mittels der üblichen Feldbus-Kommunikationseinrichtungen, bei SERCOS III üblicherweise per Ethernet, miteinander verbunden.

Bei der zentralen, benachbarten Anordnung mehrerer Teilnehmer eines Feldbus-Kommunikationssystems besteht das Problem, dass die gegenseitige Verbindung der Teilnehmer mittels der herkömmlichen Feldbus-Physik eine umfangreiche und damit fehleranfällige Verkabelung auf engem Raum bedingt.

Ausgehend von diesem Stand der Technik stellt sich die Aufgabe, die Übertragung von Feldbus-Daten zu vereinfachen, so dass insbesondere der Verkabelungsaufwand vermindert werden kann.

Diese Aufgabe wird gelöst durch ein Verfahren zum Übertragen von Feldbus-Daten zwischen wenigstens zwei Teilnehmern eines Feldbus-Kommunikationssystems, einen Teilnehmer eines Feldbus-Kommunikationssystems, ein Feldbus-Kommunikationssystem, ein Computerprogramm sowie ein Computerprogrammprodukt mit den Merkmalen der unabhängigen Patentansprüchen.

Ein erfindungsgemäßer Teilnehmer eines Feldbus-Kommunikationssystems weist geeignete Mittel auf bzw. ist entsprechend eingerichtet, um ein erfindungsgemäßes Verfahren auszuführen.

Ein erfindungsgemäßes Feldbus-Kommunikationssystem weist zumindest zwei erfindungsgemäße Teilnehmer auf.

### Vorteile der Erfindung

Mit der erfindungsgemäßen Lösung ist es möglich, Teilnehmer eines Feldbus-Kommunikationssystems zu verbinden, ohne eine Feldbus-Verkabelung vorsehen zu müssen. Es kann eine echtzeitfähige, zentral angeordnete Feldbus-Teilnehmer-Kommunikation unter Einsparung der Feldbus-Busphysik bereitgestellt werden. Vorteilhafterweise ist es möglich, die Kommunikation transparent auszugestalten, um bestehende Kommunikationsfirmware der Teilnehmer weiterhin verwenden zu können.

Vorteilhafte Ausgestaltungen sind Gegenstand der Unteransprüche sowie der nachfolgenden Beschreibung.

Vorteilhafterweise weist ein Teilnehmer weiterhin einen Feldbus-Controller, bspw. in Form eines FPGA, zum Betreiben der Feldbus-Schnittstelle auf, wobei eine dem Feldbus-Controller zugeordnete Speichereinrichtung, insbesondere ein RAM-Bereich eines FPGA, in einer Speichereinrichtung des Teilnehmers emuliert wird. Als Emulation wird das funktionelle Nachbilden eines Systems durch ein anderes bezeichnet. Bei einem geeigneten Feldbus-Controller handelt es sich insbesondere um Sercon100M- oder Sercon100S-Controller. Es ist zweckmäßig, die Emulation des Feldbus-Controllers, bspw. der SERCOS III Master- und Slave-FPGAs, in der Firmware der Teilnehmer vorzunehmen, wobei im RAM jedes Teilnehmers beispielsweise ein Speicherbereich angelegt wird, der sich zum FPGA-RAM-Interface der Hardwarebausteine verhält. Entsprechend eingerichtete Register- und Daten-Handler sorgen dann für den Datenaustausch über die gemeinsame Speichereinrichtung. Die Controller steuern die gesamte Übertragung wie z. B. Taktung, Synchronisation und Verarbeitung der zyklischen und azyklischen Daten auf Basis zweier integrierter Ethernet-MACs. Diese Aufgabe wird u.a. von den Register- und Daten-Handlern übernommen.

Zweckmäßigerweise wird als die wenigstens eine gemeinsame Speichereinrichtung eine Multiport-RAM-Speichereinrichtung, insbesondere mit Anbindung über einen PCI-Bus, bereitgestellt. Eine geeignete gemeinsame Speichereinrichtung ist bspw. eine Dualport-RAM-Speichereinrichtung mit zwei Ports. Durch die interne Kommunikation über eine Multiport-RAM-Speichereinrichtung kann eine hohe Übertragungssicherheit erreicht werden.

Bevorzugterweise werden wenigstens ein Echtzeit-Datenübertragungskanal und/oder ein Nicht-Echtzeit-Datenübertragungskanal zur Übertragung der Feldbus-Daten über die gemeinsame Speichereinrichtung zwischen den Teilnehmern bereitgestellt. Damit ist die Erfindung für eine Vielzahl von Feldbus-Standards anwendbar. Beispielsweise bei einer Feldbus-Kommunikation nach dem Standard "SERCOS interface" werden ein Übertragungskanal für eine zyklische, echtzeitfähige Datenübertragung sowie ein Übertragungskanal für eine azyklische Datenübertragung bereitgestellt.

Gemäß einer bevorzugten Ausgestaltung wird eine Datenübertragung nach dem Standard "SERCOS interface", insbesondere gemäß "SERCOS III", bereitgestellt. SERCOS interface definiert eine zyklische, synchrone und äquidistante DatenKommunikation zwischen einem Kommunikations-Master (typisch: NC-Steuerung) und mehreren Kommunikations-Slaves (typisch: Antriebe oder dezentrale E/A-Stationen). Die dabei zyklisch vom Master zu den Slaves gesendeten Daten sind im Masterdatentelegramm (MDT) und in einem (SERCOS III) oder mehreren (SERCOS II) Antriebsdatentelegrammen (AT) enthalten, wobei gemäß dieser bevorzugten Ausgestaltung der Erfindung die Übertragung nicht über die herkömmliche SERCOS-Busphysik, sondern über eine gemeinsame Speichereinrichtung stattfindet. Für Master- und Slave-Teilnehmer können in Echtzeit unter Einsparung der SERCOS-Busphysik sowohl zyklische (MDT, AT) als auch azyklische (Servicedatenkanal-Operationen) Kommunikationsdienste gewährleistet werden. Große Teile der bestehenden Kommunikationsfirmware können wiederverwendet werden. Mit der Erfindung wird mittels einer internen Verbindung eine hohe Kommunikationssicherheit bereitgestellt.

Die Erfindung betrifft zudem ein Computerprogramm mit Programmcodemitteln, die geeignet sind, ein erfindungsgemäßes Verfahren auszuführen, wenn das Computerprogramm auf einem Computer oder einer entsprechenden Recheneinheit, insbesondere einem erfindungsgemäßen Teilnehmer eines Kommunikationssystems, ausgeführt wird.

Das erfindungsgemäß vorgesehene Computerprogrammprodukt umfasst auf einem computerlesbaren Datenträger gespeicherte Programmcodemittel, die geeignet sind, ein erfindungsgemäßes Verfahren auszuführen, wenn das Computerprogramm auf einem Computer oder einer entsprechenden Recheneinheit, insbesondere einem erfindungsgemäßen Teilnehmer eines Kommunikationssystems, ausgeführt wird. Geeignete Datenträger sind insbesondere Disketten, Festplatten, Flash-Speicher, EEPROMs, CD-ROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.

### Figurenbeschreibung

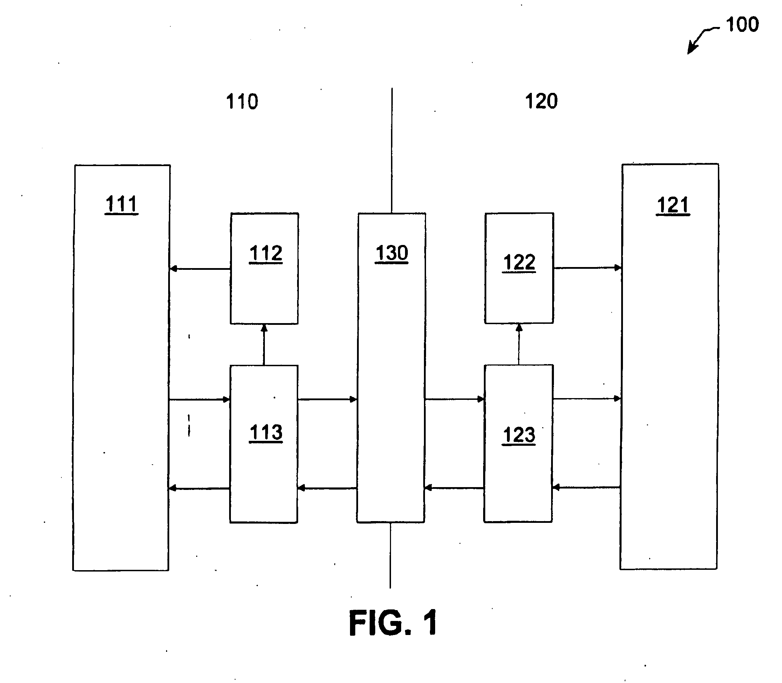

- Figur 1: zeigt eine schematische Darstellung zweier Teil- nehmer eines Feldbus-Kommunikationssystems mit einer gemeinsamen Speichereinrichtung gemäß einer bevorzugten Ausgestaltung der Erfindung.

In Figur 1 ist eine bevorzugte Ausgestaltung eines erfindungsgemäßen Kommunikationssystems schematisch dargestellt und insgesamt mit 100 bezeichnet. Das Kommunikationssystem 100 ist als Feldbus-Kommunikationssystem gemäß dem Standard "SERCOS III" ausgestaltet und weist zwei Teilnehmer 110 und 120 auf. Der Teilnehmer 110 ist im gezeigten Beispiel als SERCOS III-Master, beispielsweise als Steuerung, und der Teilnehmer 120 als SERCOS III-Slave, beispielsweise als Antriebsregelgerät, ausgestaltet. Die Feldbus-Teilnehmer 110 und 120 befinden sich beispielsweise in einem gemeinsamen Rack und verfügen über eine als Dualport-RAM-Speichereinrichtung ausgebildete gemeinsame Speichereinrichtung 130. Weiterhin verfügt jeder der Feldbus-Teilnehmer 110, 120 über eine als RAM-Speichereinrichtung ausgebildete eigene Speichereinrichtung 111 bzw. 121. Weiterhin verfügen die Feldbus-Teilnehmer 110, 120 jeweils über einen Register-Handler 112 bzw. 122 und einen Daten-Handler 113 bzw. 123.

Gemäß der dargestellten bevorzugten Ausführungsform der Erfindung wird in der Speichereinrichtung 111 eine Speicherschnittstelle eines Feldbus-Controllers, z.B. SERCON100M, emuliert. Ebenso wird in der Speichereinrichtung 121 eine Speicherschnittstelle eines Feldbus-Controllers, z.B. SERCON100S, emuliert.

Die Feldbus-Kommunikation wird nicht über die ebenfall vorhandene Feldbus-Busphysik wie z.B. eine Ethernet-Verbindung, sondern über die gemeinsame Speichereinrichtung 130 durchgeführt. Zu diesem Zweck kann vorteilhafterweise die existierende Firmware zur Ansteuerung der Feldbus-Controller weiter verwendet werden, wodurch die Feldbus-Verbindung für die Steuerung bzw. die Antriebsregelgeräte transparent durchgeführt werden kann, ohne auf die Besonderheiten der gemeinsamen Speichereinrichtung Rücksicht nehmen zu müssen. Zu diesem Zweck werden die zu übertragenden Daten an die in den Speicherbereichen 111 bzw. 121 emulierten Speicher-Schnittstellen der Feldbus-Controller übergeben. Die vorhandenen Register- und Daten-Handler 112 bzw. 122 und 113 bzw. 123 sorgen für den Datenaustausch über die Dualport-RAM-Speichereinrichtung 130.

Um die Wiederverwendbarkeit der oftmals aufwendigen Kommunikationssoftware zu gewährleisten, wird in der Firmware das RAM-Interface der FPGA-Bausteine nachgebildet bzw. emuliert. Die Kommunikationsfirmware der Busteilnehmer, die sich komplett auf dieses Interface bezieht, kann unverändert übernommen werden. Die Emulation der Hardwarebausteine und der Datenaustausch über die PCI-Bus-basierte Dualport-RAM-Verbindung sind von der restlichen Kommunikationsfirmware entkoppelt und kann einfach in die bestehenden Teilnehmer-Firmwarekomponenten integriert werden. Die Wiederverwendbarkeit der Kommunikationsfirmware ist nicht mehr von der Benutzung der SERCOS III-Busphysik (Hardware) abhängig.

Das RAM-Interface der FPGA-Bausteine (z.B. SERCON100M und SERCON100S) ist bei der herkömmlichen hardwarebasierten und der bevorzugten Lösung für die Kommunikationsfirmware identisch. Die SERCOS III-Busphysik wird durch einen Register-und Datenhandler ersetzt, der jeweils in die bestehenden Teilnehmer-Firmwarekomponenten von Master und Slave integriert wird. Ein von beiden Seiten bedienbares PCI-Busbasiertes Dualport-RAM dient zum Datenaustausch.

Es versteht sich, dass in den dargestellten Figuren nur eine besonders bevorzugte Ausführungsform der Erfindung dargestellt ist. Daneben ist jede andere Ausführungsform denkbar, ohne den Rahmen dieser Erfindung zu verlassen.

### Bezugszeichenliste

- 100: Kommunikationssystem
- 110, 120: Teilnehmer
- 130: Dualport-RAM-Speichereinrichtung
- 111, 121: RAM-Speichereinrichtung
- 112, 122: Register-Handler
- 113, 123: Daten-Handler

## Patentansprüche

1. Verfahren zum Übertragen von Feldbus-Daten zwischen wenigstens zwei Teilnehmern (110, 120) eines Feldbus-Kommunikationssystems (100), wobei jeder Teilnehmer (110, 120) zumindest eine Speichereinrichtung (111, 121) aufweist,
**dadurch gekennzeichnet, dass** für die wenigstens zwei Teilnehmer (110, 120) wenigstens eine gemeinsame Speichereinrichtung (130) bereitgestellt wird,
wobei von dem ersten Teilnehmer (110, 120) unter Einsparung der Feldbus-Busphysik Feldbus-Daten in die wenigstens eine gemeinsame Speichereinrichtung (130) geschrieben werden und
die Feldbus-Daten von dem zweiten Teilnehmer (120, 110) unter Einsparung der Feldbus-Busphysik aus der wenigstens einen gemeinsamen Speichereinrichtung (130) gelesen werden.

2. Verfahren nach Anspruch 1, wobei ein Teilnehmer (110, 120) weiterhin einen Feldbus-Controller aufweist, wobei eine dem Feldbus-Controller zugeordnete Speicherschnittstelle in der Speichereinrichtung (111, 121) des Teilnehmers (110, 120) emuliert wird.

3. Verfahren nach Anspruch 1 oder 2, wobei als wenigstens eine gemeinsame Speichereinrichtung (130) eine Multiport-RAM-Speichereinrichtung bereitgestellt wird.

4. Verfahren nach einem der vorstehenden Ansprüche, wobei wenigstens ein Echtzeit-Datenübertragungskanal und/oder ein Nicht-Echtzeit-Datenübertragungskanal zur Übertragung der Feldbus-Daten über die gemeinsame Speichereinrichtung (130) zwischen den Teilnehmern (110, 120) bereitgestellt wird.

5. Verfahren nach einem der vorstehenden Ansprüche, wobei eine Datenübertragung über die gemeinsame Speichereinrichtung (130) nach dem Standard "SERCOS interface", insbesondere gemäß "SERCOS III", bereitgestellt wird.

6. Teilnehmer eines Feldbus-Kommunikationssystems (100), zumindest mit:
einer Speichereinrichtung (111, 121),
**gekennzeichnet durch** wenigstens eine gemeinsame Speichereinrichtung (130), die von weiteren Teilnehmern (120, 110) des Feldbus-Kommunikationssystems (100) unter Einsparung der Feldbus-Busphysik beschreibbar und auslesbar ist,
wobei der Teilnehmer (110, 120) dazu eingerichtet ist, Feldbus-Daten unter Einsparung der Feldbus-Busphysik in die wenigstens eine gemeinsame Speichereinrichtung (130) zu schreiben und/oder Feldbus-Daten unter Einsparung der Feldbus-Busphysik aus der wenigstens einen gemeinsamen Speichereinrichtung (130) zu lesen.

7. Teilnehmer nach Anspruch 6, mit einem Feldbus-Controller zum Betreiben der Feldbus-Schnittstelle, wobei der Teilnehmer (110, 120) dazu eingerichtet ist, eine dem Feldbus-Controller zugeordnete Speicherschnittstelle in der Speichereinrichtung (111, 121) zu emulieren.

8. Teilnehmer nach Anspruch 6 oder 7, der eine Multiport-RAM-Speichereinrichtung als wenigstens eine gemeinsame Speichereinrichtung (130) aufweist.

9. Teilnehmer nach Anspruch 6, 7 oder 8, der als Teilnehmer (110, 120) für ein Kommunikationssystem nach dem Standard "SERCOS interface", insbesondere gemäß "SERCOS III", ausgebildet ist.

10. Feldbus-Kommunikationssystem (100) zum Übertragen von Feldbus-Daten, umfassend wenigstens zwei Teilnehmer (110, 120) nach einem der Ansprüche 6 bis 9.

11. Computerprogramm mit Programmcodemitteln, die geeignet sind, ein Verfahren nach einem der Ansprüche 1 bis 5 auszuführen, wenn das Computerprogramm auf einem Computer oder einer entsprechenden Recheneinheit, insbesondere einem Teilnehmer (110, 120) eines Kommunikationssystems nach einem der Ansprüche 6 bis 9, ausgeführt wird.

12. Computerprogrammprodukt umfassend auf einem computerlesbaren Datenträger gespeicherte Programmcodemittel, die geeignet sind, ein Verfahren nach einem der Ansprüche 1 bis 5 auszuführen, wenn das Computerprogramm auf einem Computer oder einer entsprechenden Recheneinheit, insbesondere einem Teilnehmer (110, 120) eines Kommunikationssystems nach einem der Ansprüche 6 bis 9, ausgeführt wird.

## Claims

1. Method for transmitting field bus data between at least two subscribers (110, 120) in a field bus communication system (100), wherein each subscriber (110, 120) has at least one memory device (111, 121), **characterized in that** at least one common memory device (130) is provided for the at least two subscribers (110, 120),
wherein the first subscriber (110, 120) writes field bus data to the at least one common memory device (130) by economizing on the bus physics of the field bus, and the field bus data are read from the at least one common memory device (130) by the second subscriber (120, 110) by economizing on the bus physics of the field bus.

2. Method according to Claim 1, wherein a subscriber (110, 120) also has a field bus controller, wherein a memory interface associated with the field bus controller is emulated in the memory device (111, 121) of the subscriber (110, 120).

3. Method according to Claim 1 or 2,
wherein the at least one common memory device (130) provided is a multiport RAM memory device.

4. Method according to one of the preceding claims, wherein at least one real-time data transmission channel and/or a non-real-time data transmission channel is provided between the subscribers (110, 120) for the purpose of transmitting the field bus data via the common memory device (130).

5. Method according to one of the preceding claims, wherein a data transmission via the common memory device (130) is provided on the basis of the "SERCOS interface" standard, particularly according to "SERCOS III".

6. Subscriber in a field bus communication system (100), having at least:
a memory device (111, 121),
**characterized by** at least one common memory device (130) which can be written to and read by further subscribers (120, 110) in the field bus communication system (100) by economizing on the bus physics of the field bus,
wherein the subscriber (110, 120) is set up to write field bus data to the at least one common memory device (130) by economizing on the bus physics of the field bus and/or to read field bus data from the at least one common memory device (130) by economizing on the bus physics of the field bus.

7. Subscriber according to Claim 6, having a field bus controller for operating the field bus interface, wherein the subscriber (110, 120) is set up to emulate a memory interface associated with the field bus controller in the memory device (111, 121).

8. Subscriber according to Claim 6 or 7, which has a multiport RAM memory device as at least one common memory device (130).

9. Subscriber according to Claim 6, 7 or 8, which is in the form of a subscriber (110, 120) for a communication system based on the "SERCOS interface" standard, particularly according to "SERCOS III".

10. Field bus communication system (100) for transmitting field bus data, comprising at least two subscribers (110, 120) according to one of Claims 6 to 9.

11. Computer program having program code means which are suitable for performing a method according to one of Claims 1 to 5 when the computer program is executed on a computer or an appropriate computation unit, particularly a subscriber (110, 120) in a communication system according to one of Claims 6 to 9.

12. Computer program product comprising program code means which are stored on a computer-readable data storage medium and which are suitable for performing a method according to one of Claims 1 to 5 when the computer program is executed on a computer or an appropriate computation unit, particularly a subscriber (110, 120) in a communication system according to one of Claims 6 to 9.

## Revendications

1. Procédé de transmission de données de bus de terrain entre au moins deux abonnés (110, 120) d'un système de communication à bus de terrain (100), chaque abonné (110, 120) présentant au moins un dispositif de mémorisation (111, 121),
**caractérisé en ce qu'**au moins un dispositif de mémorisation commun (130) est mis à la disposition d'au moins deux abonnés (110, 120),
des données de bus de terrain étant écrites dans l'au moins un dispositif de mémorisation commun (130) par le premier abonné (110, 120) en ménageant le bus de terrain physique et
les données de bus de terrain étant lues par le deuxième abonné (120, 110) depuis l'au moins un dispositif de mémorisation commun (130) en ménageant le bus de terrain physique.

2. Procédé selon la revendication 1, selon lequel un abonné (110, 120) présente en outre un contrôleur de bus de terrain, une interface de mémoire associée au contrôleur de bus de terrain étant émulée dans le dispositif de mémorisation (111, 121) de l'abonné (110, 120).

3. Procédé selon la revendication 1 ou 2, selon lequel le dispositif de mémorisation commun (130) mis à disposition est un dispositif de mémorisation à RAM multiport.

4. Procédé selon l'une des revendications précédentes, selon lequel au moins un canal de transmission de données en temps réel et/ou un canal de transmission de données en temps non réel est mis à disposition pour la transmission des données de bus de terrain par le biais du dispositif de mémorisation commun (130) entre les abonnés (110, 120).

5. Procédé selon l'une des revendications précédentes, selon lequel une transmission de données est mise à disposition par le biais du dispositif de mémorisation commun (130) conformément à la norme « interface SERCOS », notamment conformément à « SERCOS III ».

6. Abonné d'un système de communication à bus de terrain (100) comprenant au moins :
un dispositif de mémorisation (111, 121),
**caractérisé par** au moins un dispositif de mémorisation commun (130) qui peut être écrit et lu par d'autres abonnés (110, 120) du système de communication à bus de terrain (100) en ménageant le bus de terrain physique,
l'abonné (110, 120) étant configuré pour écrire des données de bus de terrain dans l'au moins un dispositif de mémorisation commun (130) en ménageant le bus de terrain physique et/ou pour lire des données de bus de terrain depuis l'au moins un dispositif de mémorisation commun (130) en ménageant le bus de terrain physique.

7. Abonné selon la revendication 6, comprenant un contrôleur de bus de terrain pour commander l'interface de bus de terrain, l'abonné (110, 120) étant configuré pour émuler une interface de mémoire associée au contrôleur de bus de terrain dans le dispositif de mémorisation (111, 121).

8. Abonné selon la revendication 6 ou 7, lequel présente, en tant qu'au moins un dispositif de mémorisation commun (130), un dispositif de mémorisation à RAM multiport.

9. Abonné selon la revendication 6, 7 ou 8, lequel est réalisé sous la forme d'un abonné (110, 120) pour un système de communication conforme à la norme « interface SERCOS », notamment conformément à « SERCOS III ».

10. Système de communication à bus de terrain (100) pour la transmission de données de bus de terrain, comprenant au moins deux abonnés (110, 120) selon l'une des revendications 6 à 9.

11. Programme informatique comprenant des moyens de code de programme qui sont conçus pour mettre en oeuvre un procédé selon l'une des revendications 1 à 5 lorsque le programme informatique est exécuté sur un ordinateur ou sur une unité de calcul correspondante, notamment d'un abonné (110, 120) d'un système de communication selon l'une des revendications 6 à 9.

12. Produit de programme informatique comprenant des moyens de code de programme enregistrés sur un support de données lisible sur ordinateur, lesquels sont conçus pour mettre en oeuvre un procédé selon l'une des revendications 1 à 5 lorsque le programme informatique est exécuté sur un ordinateur ou sur une unité de calcul correspondante, notamment d'un abonné (110, 120) d'un système de communication selon l'une des revendications 6 à 9.
